# FASCICULE DE BREVET EUROPEEN

(11) **EP 0 647 076 B1**
(45) Date de publication et mention de la délivrance du brevet: **14.01.2004**
(21) Numéro de dépôt: 94460035.2
(22) Date de dépôt: 03.10.1994
(51) Int. Cl.: H04Q 7/22

(54) **Système de radiocommunication cellulaire permettant l'accès à un service fonction de la localisation, module de prélèvement et module de fourniture d'un service personnalisé correspondant**
Zellulares Funkkommunikationssystem mit Zugriff zu standortabhängigen Diensten, Standortermittlungsmodul und Dienstleistungsmodul für kundenspezifische, standortabhängige Diensten
Cellular radio communication system with access to location dependant service, location retrieving module and server module for personal, location dependant services

(30) Priorité: 05.10.1993 FR 9312050
(43) Date de publication de la demande: 05.04.1995
(73) Titulaire: Société Française du Radiotéléphone, 92915 Paris la Défense (FR)
(72) Inventeur: Remy, Jean-Gabriel, F-94170 Le Perreux (FR)
(74) Mandataire: Vidon, Patrice

(56) Documents cités:
- EP-A- 0 367 007
- EP-A- 0 497 203
- WO-A-93/01665
- WO-A-93/18606
- GB-A- 2 201 865

## Description

Le domaine de l'invention est celui des systèmes de radiocommunication cellulaire avec des stations mobiles, notamment selon le standard GSM ("Global System for Mobile communication" en anglo-saxon).

Plus précisément, la présente invention concerne un système de radiocommunication cellulaire comprenant des moyens, un serveur par exemple, permettant de fournir à une station mobile un service personnalisé fonction d'une information de localisation de cette station mobile.

D'une façon générale, l'invention peut s'appliquer dans tous les cas où le serveur (ou tous moyens offrant des services d'information) appelé par une station mobile utilise une information de localisation de cette station mobile pour lui fournir un ou plusieurs services personnalisés géographiquement.

Un exemple de service personnalisé géographiquement est la fourniture à une station mobile de l'adresse de l'hôtel qui lui est le plus proche.

On connaît, dans l'état de la technique, différents types de moyens d'information (serveur ou autres) accessibles par des stations mobiles et offrant des services fonction d'un paramètre de localisation géographique.

Ces différents types de moyens d'information fonctionnent tous selon un même principe d'interrogation, à savoir : lors d'une première phase, la station mobile établit une communication avec des moyens d'information, puis lors d'une seconde phase, la station mobile communique aux moyens d'information les paramètres de localisation nécessaires à l'établissement d'une réponse personnalisée géographiquement.

Ce principe connu d'interrogation présente un inconvénient majeur à savoir la nécessité pour la station mobile de fournir des informations sur sa localisation géographique.

En effet, ceci implique que l'interrogation ne peut pas être de courte durée puisqu'elle comprend obligatoirement deux phases, la seconde phase (de communication de paramètres de localisation) réclamant l'intervention de l'abonné se trouvant dans la station mobile.

De plus, cet abonné peut ne pas connaître précisément sa localisation géographique ou bien se tromper lors de la phase de communication de paramètres de localisation, ce qui entraîne une interrogation insuffisante ou erronée.

On connaît également le document EP497203 (BELLSOUTH CORP.), qui concerne un système automatique et interactif permettant d'identifier et de contacter une classe de clients d'un réseau cellulaire de radiotéléphones mobiles du type associant à chaque cellule un contrôleur de cellule relié à un centre de commutation de téléphones mobiles (MTSO). Ce document décrit les caractéristiques du préambule de chacune des revendications indépendantes 1 et 10 de la présente demande.

L'invention a notamment pour objectif de pallier cet inconvénient majeur de l'état de la technique.

Plus précisément, un objectif de l'invention est de fournir un système de radiocommunication cellulaire, mis en oeuvre au sein d'un réseau de cellules géographiques parcouru par des stations mobiles, et comprenant des moyens de fournir à une station mobile au moins un service personnalisé fonction d'une information de localisation géographique de cette station mobile, l'abonné se trouvant dans la station mobile n'ayant pas à annoncer aux moyens de fournir un service personnalisé l'endroit où il se trouve. En d'autres termes, l'interrogation des moyens de fournir un service doit être automatique dès lors que l'abonné de la station mobile a composé le numéro de ces moyens de fournir un service.

L'invention a également pour objectif de fournir un tel système qui puisse être réalisé simplement à partir de n'importe quel système existant de radiocommunication cellulaire.

Un autre objectif de l'invention est de fournir un tel système qui permette une interrogation rapide et sans erreur, par une station mobile, de moyens de fournir un service personnalisé géographiquement.

Un objectif complémentaire de l'invention est de fournir un tel système pouvant être réalisé aussi bien en analogique qu'en numérique.

Ces objectifs, ainsi que d'autres qui apparaîtront par la suite, sont atteints selon un premier mode de réalisation de l'invention à l'aide d'un système tel que défini dans la revendication 1.

Ainsi, le principe de l'invention consiste, lorsque la station mobile appelle les moyens de fournir un service, à aller chercher dans les données de signalisation une information de localisation existante et utilisée uniquement à des fins d'établissement de cet appel, entre le sous-système de station de base et le sous-système de commutation et de réseau. Une fois prélevée, cette information de localisation est transmise aux moyens de fournir un service qui l'utilisent comme paramètre d'interrogation.

Il est clair que cette nouvelle utilisation de l'information de localisation (comme paramètre d'interrogation, c'est-à-dire comme donnée utile), possède une finalité distincte de l'utilisation d'origine (comme donnée de signalisation).

On notera que les moyens de fournir un service reçoivent d'une part la communication provenant de la station mobile et qui a été routée par le réseau grâce à différents messages de signalisation, et d'autre part un message complémentaire transmis par une voie indépendante.

Ce premier mode de réalisation de l'invention nécessite donc simplement l'ajout de nouveaux moyens et n'implique pas la modification de l'existant. En d'autres termes, ce premier mode de réalisation est compatible avec tous les types existants de systèmes de radiocommunication cellulaire, analogiques aussi bien que numériques.

Par ailleurs, l'interrogation proprement n'a lieu dans les moyens de fournir un service que lorsque d'une part la communication est établie et d'autre part le message complémentaire (contenant notamment l'information de localisation) est arrivé.

Avantageusement, lesdits moyens de fournir au moins un service sont un serveur, ce serveur pouvant être vocal ou numérique.

Préférentiellement, lesdits moyens de fournir au moins un service appartiennent à un réseau fixe relié audit commutateur du service mobile de chaque sous-système de station de base.

De façon avantageuse, lesdits moyens de reconnaissance et de dérivation sont internes audit commutateur du service mobile.

Ainsi, la dérivation du premier message de signalisation est réalisée en un unique endroit, par lequel sont acheminées toutes les communications provenant des stations mobiles, à savoir le commutateur du service mobile (du sous-système de commutation et de réseau).

Avantageusement, lesdits moyens de reconnaissance et de dérivation sont réalisés sous forme de liaisons semi-permanentes.

Préférentiellement, ledit premier message de signalisation contient également un premier identifiant de la station mobile et le numéro des moyens de fourniture d'au moins un service,
ledit second message de signalisation contenant notamment un second identifiant de la station mobile et ledit numéro des moyens de fourniture d'au moins un service,
lesdits moyens de prélèvement externes comprenant également:
- des seconds moyens d'extraction dudit premier identifiant de la station mobile contenu dans ledit premier message de signalisation reçu ;
- des premiers moyens de génération, à partir d'une table de transcodage et dudit premier identifiant de la station mobile, d'un second identifiant de la station mobile ;
- des troisièmes moyens d'extraction dudit numéro des moyens de fourniture d'au moins un service, contenu dans ledit premier message de signalisation reçu ;
et ledit message complémentaire élaboré par lesdits seconds moyens de construction de message contenant également ledit second identifiant de la station mobile et ledit numéro des moyens de fournir au moins un service.

Ainsi, le second message de signalisation (qui permet l'établissement de la communication entre la station mobile et les moyens de fournir un service) et le message complémentaire transmis indépendamment possèdent des données communes, à savoir notamment le second identifiant de la station mobile et le numéro des moyens de fournir un service. De cette façon, les moyens de fournir un service peuvent effectuer une corrélation entre le message de signalisation et le message complémentaire, et en déduire le service à rendre à l'abonné appelant d'une station mobile.

Avantageusement, ladite table de transcodage permettant de générer ledit second identifiant de la station mobile à partir dudit premier identifiant de la station mobile est mise à jour grâce à une base de données de localisation appartenant audit sous-système de commutation et de réseau.

Par exemple, lesdits moyens de prélèvement externes sont compris dans un serveur annexe.

Les objectifs précités sont également atteints, selon un second mode de réalisation avantageux de l'invention, à l'aide d'un système tel que défini dans la revendication 10.

En d'autres termes, on ajoute dans le second message de signalisation l'information de localisation extraite du premier message de signalisation.

Ainsi, les moyens de fournir un service reçoivent uniquement la communication provenant de la station mobile, et qui a été routée par le réseau grâce à différents messages de signalisation contenant (selon l'invention) l'information de localisation.

Ce message initial d'adresse (ou MIF) est un message de signalisation CCITT n° 7. Selon cette caractéristique de l'invention, on utilise un champ qui n'est pas utilisé lors d'un appel direct non renvoyé, à savoir le champ "Identité du premier appelé", pour transmettre l'information de localisation aux moyens de fournir un service.

Ainsi, lorsque l'appel de la station mobile est acheminé vers ces moyens de fournir un service, ces derniers reçoivent le MIF et en extraient l'information de localisation afin d'en déduire instantanément le service à rendre à la station mobile.

Avantageusement, ledit premier message de signalisation comprend également un premier identifiant de la station mobile et le numéro des moyens de fourniture d'au moins un service,
ledit second message de signalisation, qui comprend également ladite information de localisation, comprenant notamment un second identifiant de la station mobile et ledit numéro des moyens de fourniture d'au moins un service.

Préférentiellement, lesdits moyens de prélèvement internes audit commutateur du service mobile appartiennent au groupe comprenant : les processeurs de traitement d'appels et les processeurs associés à un processeur de traitement d'appels.

Dans le cas de l'utilisation du processeur de traitement d'appels, il suffit de modifier l'algorithme mis en oeuvre dans ce processeur, de façon à traiter spécifiquement les appels destinés à un serveur offrant un service dépendant d'une information géographique.

De façon avantageuse, ledit message initial d'adresse comprend en outre :
- dans le champ "Deuxième octet d'indicateurs" dudit message initial d'adresse, d'une part une première information complémentaire indiquant la présence d'une information dans ledit champ "Identité du premier appelé" et d'autre part une seconde information complémentaire indiquant que ladite information présente dans le champ "Identité du premier appelé" est ladite information de localisation ; et
- dans le champ "Indicateur de message" dudit message initial d'adresse, une troisième information complémentaire indiquant que ledit champ "Identité du premier appelé" est utilisé.

Dans un mode de réalisation particulier de l'invention, le système est du type GSM.

D'autres caractéristiques et avantages de l'invention apparaîtront à la lecture de la description suivante de deux modes de réalisation préférentiels de l'invention donnés à titre d'exemple indicatif et non limitatif, et des dessins annexés, dans lesquels :
- la figure 1 présente un schéma global d'un exemple de système de radiocommunication cellulaire selon l'invention ;
- la figure 2 présente un schéma logique partiel d'un premier mode de réalisation du système selon l'invention tel que présenté sur la figure 1;
- la figure 3 présente un schéma logique détaillé du serveur annexe apparaissant sur la figure 2 ;
- la figure 4 présente un schéma logique partiel d'un second mode de réalisation du système selon l'invention tel que présenté sur la figure 1 ;
- la figure 5 présente un schéma logique détaillé des moyens de traitement de la signalisation apparaissant sur la figure 4 ; et
- la figure 6 présente de façon simplifiée un message initial d'adresse tel qu'utilisé dans le second mode de réalisation du système selon l'invention présenté sur les figures 4 et 5.

L'invention concerne donc un système de radiocommunication cellulaire permettant l'interrogation, par une station mobile, de moyens de fournir un service personnalisé fonction de la localisation.

La suite de la description présente l'invention à travers l'exemple particulier d'un système GSM ("Global System for Mobile Communication" en anglo-saxon) dont les abonnés peuvent accéder à un serveur leur offrant des services fonctions de leur localisation.

Il est clair que l'invention n'est pas limitée au seul système GSM mais concerne plus généralement tout type de système de radiocommunication cellulaire (analogique ou numérique).

De même, de nombreux modes de réalisation des moyens de fournir un service personnalisé, autres qu'un serveur, peuvent être envisagés sans sortir du cadre de l'invention.

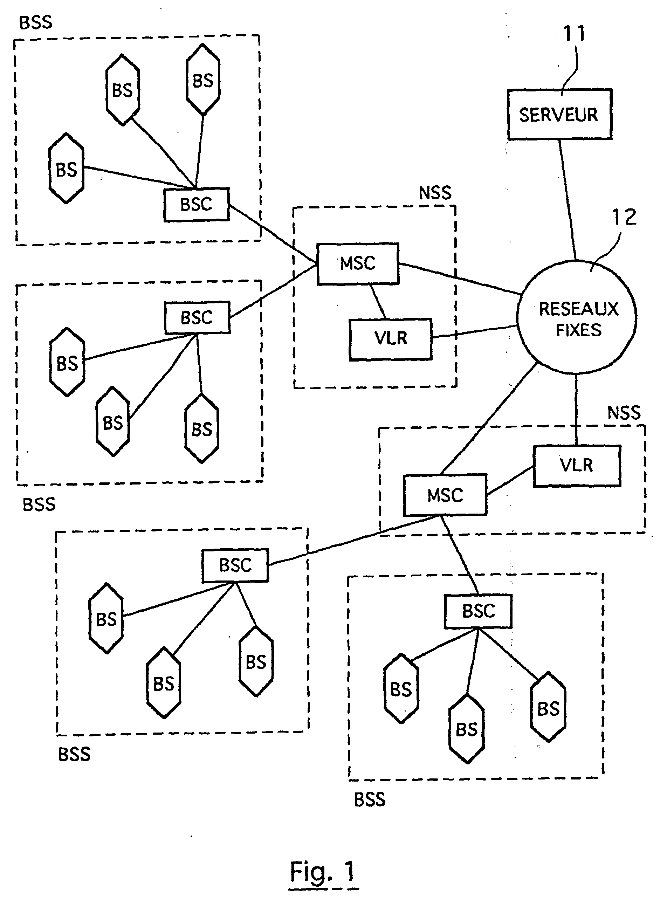

Le système GSM, dont un schéma global est présenté sur la figure 1, est structuré hiérarchiquement. En effet, chaque abonné est associé à une station mobile MS lui permettant d'émettre ou de recevoir des appels tout en se déplaçant dans un espace prédéterminé. Cet espace d'évolution des stations mobiles est décomposé en un réseau de cellules adjacentes. A chaque cellule est associée une station de base BS émettrice/réceptrice distincte. Les stations de base BS sont reliées, par groupes de 15 à 100, à un contrôleur de station de base (ou BSC pour "Base Station Controller" en anglo-saxon). Un contrôleur de station de base BSC et les station de base BS qui lui sont reliées constituent un sous-ensemble de station de base (ou BSS pour "Base Station Sub-system" en anglo-saxon).

Plusieurs sous-systèmes de stations de base BSS sont reliés à un même sous-système de commutation et de réseau (ou NSS pour "Network and Switching Center" en anglo-saxon). Chaque sous-système de commutation et de réseau NSS comprend notamment un commutateur du service mobile (ou MSC pour "Mobile services Switching Center" en anglo-saxon) auquel sont reliés les contrôleurs de stations de base BSC des sous-systèmes de station de base BSS dépendant de ce sous-système de commutation et de réseau NSS.

Enfin, les sous-systèmes de commutation et de réseau NSS, ou plus précisément les commutateurs du service mobile MSC des NSS, sont reliés entre eux, par l'intermédiaire d'un des réseaux (fixes ou non) existants 12, à savoir notamment le RTCP (Réseau Téléphonique Commuté Publique) ou le RNIS (Réseau Numérique à Intégration de Service).

Le serveur (vocal ou numérique) 11 offrant des services fonction d'une localisation est relié aux commutateurs du service mobiles MSC par l'un de ces réseaux intermédiaires 12.

Lorsqu'un abonné d'une station mobile MS désire obtenir un service personnalisé fonction de sa localisation, il compose le numéro spécifique du serveur 11. Cet appel est transmis entre le BSS dont dépend la station mobile et le NSS auquel cette BSS est reliée, puis acheminé vers le serveur 11 via un réseau intermédiaire 12.

Plus précisément, la transmission de l'appel, consiste à transmettre diverses données de signalisation. Ainsi, le BSS, lorsqu'il reçoit la demande d'appel de la station mobile, élabore (dans des premiers moyens de construction de message non représentés et généralement situés dans le BSC) un premier message de signalisation et le transmet au NSS. Afin de permettre l'établissement ultérieur de la communication, ce premier message contient notamment une information de localisation de la station mobile dans le réseau de cellules géographiques. Cette information de localisation permet de retrouver le BSS d'où provient l'appel, et plus précisément la station de base à laquelle est associée la station mobile (et donc la cellule dans laquelle elle se trouve). La taille d'un cellule étant généralement de l'ordre de 1 à 20 km, cette information de localisation est suffisamment précise pour servir de paramètre pour l'interrogation du serveur 11.

Le principe de l'invention consiste à prélever cette information de localisation contenue dans le premier message de signalisation transmis entre le BSS et le NSS, et à l'acheminer jusqu'au serveur 11.

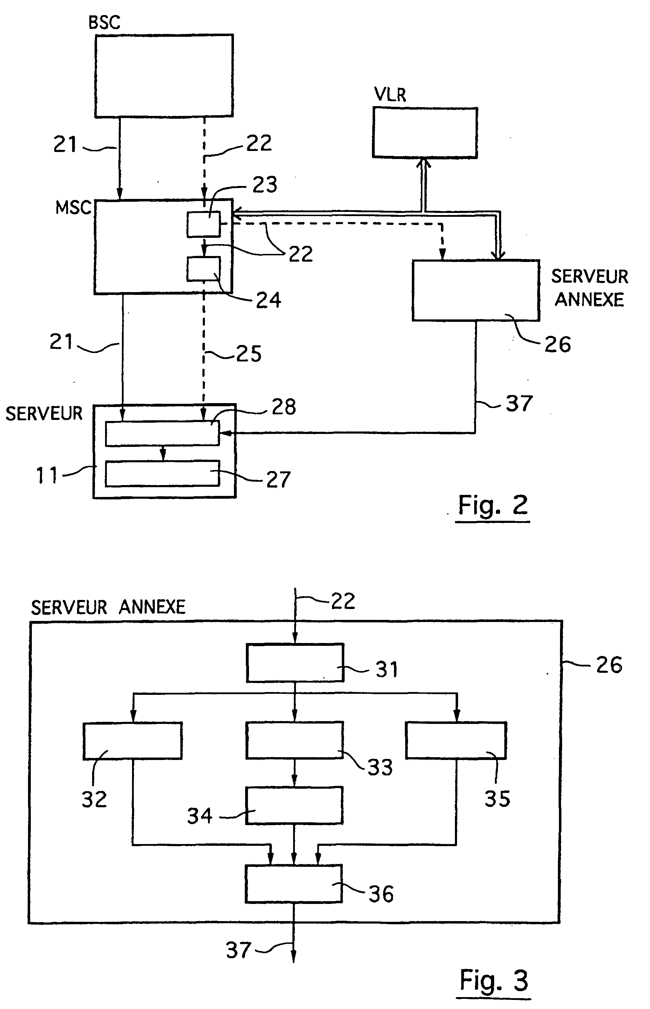

Deux modes de réalisation de la présente invention sont décrits par la suite respectivement avec les figures 2 et 3, et les figures 4 à 6.

La figure 2 présente un schéma logique partiel d'un premier mode de réalisation du système selon l'invention.

Le contrôleur de station de base BSC transmet au commutateur du service mobile MSC d'une part un signal utile 21 (un signal de parole par exemple) et d'autre par des données de signalisation, sous la forme d'un premier message de signalisation 22.

Dans cet exemple, le premier message de signalisation comprend notamment :
- un premier identifiant de la station mobile, à savoir un numéro TMSI (pour "Temporary Mobile Subscriber Identify" en anglo-saxon) ;
- le numéro de l'appelé ; et
- une information de localisation (c'est-à-dire l'identité de la cellule trafic), à savoir un BSCI (pour "Base Station Identify Code" en anglo-saxon).

Le MSC comprend des moyens 23 de reconnaissance et de dérivation et des moyens 24 de construction d'un second message de signalisation.

Les moyens 24 de construction de message reçoivent toujours le premier message de signalisation 22 et élaborent à partir de celui-ci un second message de signalisation 25.

Ce second message de signalisation 25 comprend notamment:
- un second identifiant de la station mobile, à savoir un numéro MSISDN (pour "Mobile Station ISDN Number" en anglo-saxon) obtenu par transformation du TMSI grâce à une base de données (ou VLR pour "Visiting Location Register" en anglo-saxon) contenant des tables de correspondance ; et
- le numéro de l'appelé.

Lorsque le numéro de l'appelé est le numéro du serveur 11 fournissant le service personnalisé lié à la localisation, les moyens 23 de reconnaissance et de dérivation, réalisés par exemple sous forme de liaisons semi-permanentes, dérivent le premier message de signalisation 22 vers un serveur annexe 26.

Le serveur annexe 26 dont un schéma détaillé est présenté sur la figure 3, comprend :
- des moyens 31 de réception du premier message de signalisation 22;
- des moyens 32 d'extraction de l'information de localisation BSIC contenue dans le premier message de signalisation ;
- des moyens 33 d'extraction du premier identifiant TMSI de la station mobile contenu dans le premier message de signalisation, et des moyens 34 de génération d'un second identifiant MSISDN de la station mobile à partir du premier identifiant TMSI et d'une table de transcodage ;
- des moyens 35 d'extraction du numéro du serveur 11 contenu dans le premier message de signalisation ; et
- des moyens 36 de construction de message permettant d'élaborer un message complémentaire 37 contenant notamment : l'information de localisation BSIC, le second identifiant de la station mobile MSISDN et le numéro du serveur 11.

La table de transcodage utilisée par les moyens 34 de génération du MSISDN est mise à jour par la base de donnée VLR.

Le message complémentaire 37 est par exemple transmis au serveur 11 par une liaison de données.

Le serveur 11 reçoit donc :
- d'une part, le signal de parole 21 et le second message de signalisation 25, provenant du MSC ; et
- d'autre part, le message complémentaire 37 provenant du serveur annexe 26.

Le serveur 11 peut comprendre, en plus des moyens 27 de traitement proprement dit (fournissant le service personnalisé géographiquement), des moyens 28 de stockage tampon. Ces moyens 28 de stockage tampon sont situés en amont des moyens 27 de traitement et permettent de compenser les décalages temporaires de réception des différents signaux reçus 21, 25, 37. Par exemple, ces moyens 28 de stockage tampon permettent au serveur 11 de recevoir la communication (signal de parole 21 et second message de signalisation 25) provenant du MSC, puis d'émettre un message d'accueil vers la station mobile pendant qu'il acquiert l'information de localisation contenue dans le message complémentaire 37 provenant du serveur annexe 26.

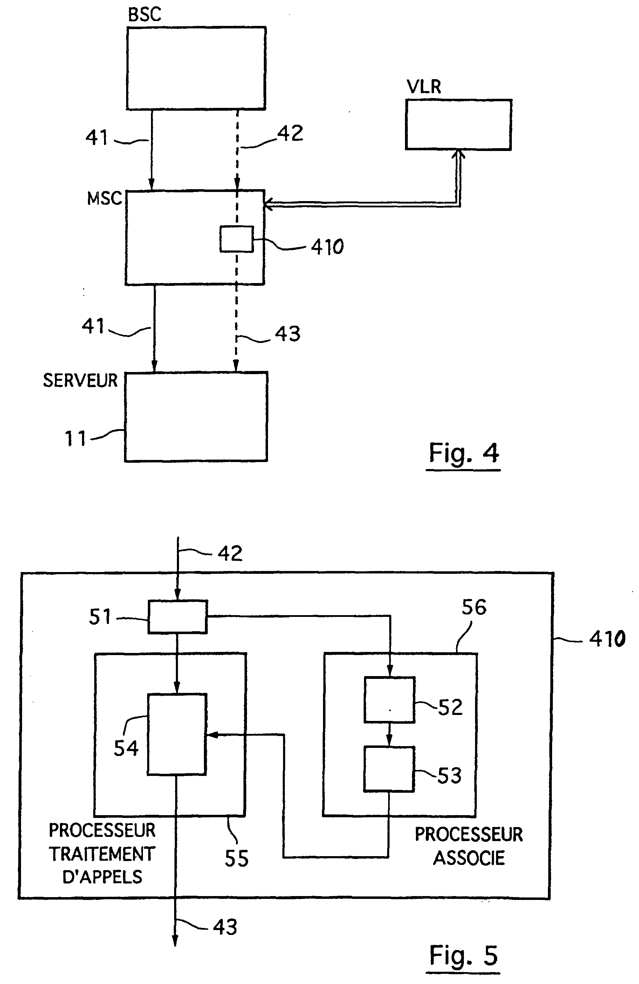

La figure 4 présente un schéma logique partiel d'un second mode de réalisation du système selon l'invention.

Comme dans le premier mode de réalisation, le BSC transmet au MSC d'une part un signal de parole 41 et d'autre part un premier message de signalisation 42 (contenant le numéro TMSI, le numéro du serveur 11 et le BSCI).

Le MSC comprend notamment des moyens 410 de traitement de la signalisation, recevant le premier message de signalisation 42 et générant un second message de signalisation 43 à destination du serveur 11.

Ces moyens 410 de traitement de la signalisation, dont un schéma logique détaillé est présenté sur la figure 3, comprennent notamment :
- des moyens 51 de reconnaissance et de dérivation du premier message de signalisation 42 ;
- des moyens 52 de réception du premier message de signalisation dérivé ;
- des moyens 53 d'extraction de l'information de localisation BSIC contenue dans le premier message de signalisation reçu ; et
- des moyens 54 de construction du second message de signalisation 43.

Ces moyens 54 de construction de message reçoivent d'une part le premier message de signalisation 42 (à partir duquel ils retrouvent le numéro du serveur et le numéro MSISDN) et d'autre part le BSIC provenant des moyens 53 d'extraction.

Le second message de signalisation comprend alors le numéro MSISDN (identifiant l'appelant), le numéro du serveur et le BSIC (information de localisation).

Le serveur reçoit le signal de parole et ce second message de signalisation, et traite ce dernier afin d'en extraire l'information de localisation et en déduire instantanément le service personnalisé lié à la localisation à rendre à l'abonné présent dans la station mobile appelante.

Dans l'exemple présenté sur la figure 5, les moyens 54 de construction de message sont placés dans le processeur de traitement d'appels 55 du MSC et les moyens 52 de réception et les moyens 53 d'extraction sont placés dans un processeur associé 56. Il est clair qu'on peut imaginer d'autres modes de réalisation, et notamment l'utilisation du seul processeur de traitement d'appels 55 afin d'assurer l'ensemble des fonctions précitées.

Le second message de signalisation 43 peut être un message initial d'adresse ou MIF. Le MIF est un message de signalisation CCITT n°7 délivré par le MSC et accompagnant chaque communication. Ce MIF transite sur le réseau sémaphore lors de l'établissement de la communication.

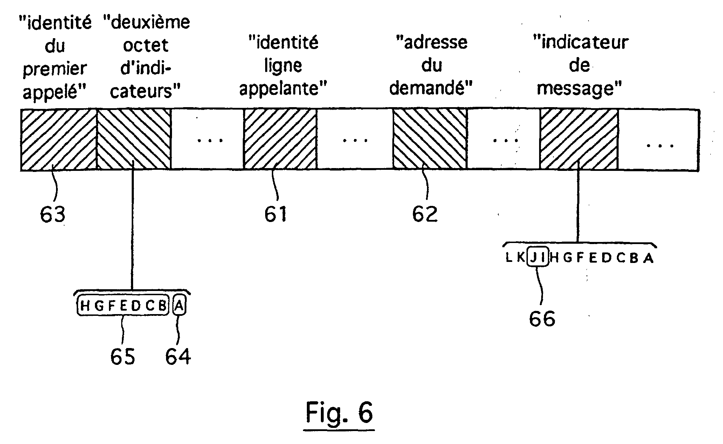

Comme présenté de façon simplifiée sur la figure 6, dans le cas d'un appel du serveur par une station mobile, le MIF correspondant comprend notamment :
- un champ "Identité de la ligne appelante" contenant le numéro MSISDN 61 de la station mobile ;
- un champ "Adresse du demandé" contenant le numéro du serveur 62 ;
- un champ "Identité du premier appelé" contenant l'information de localisation BSIC 63 ;
- un champ "Deuxième octet d'indicateurs" contenant d'une part une première information complémentaire 64 (élément binaire noté A) indiquant la présence d'une information dans le champ "Identité du premier appelé" et d'autre part une seconde information complémentaire 65 (éléments binaires notés B à H) indiquant que l'information présente dans le champ "Identité du premier appelé" est l'information de localisation BSIC 63 ; et
- un champ "Indicateur de message" contenant une troisième information complémentaire 66 indiquant que le champ "Identité du premier appelé" est utilisé.

Ainsi, le champ "Identité du premier appelé" prévu pour gérer les appels renvoyés, et qui est donc inutile ici puisqu'il s'agit d'un appel direct non renvoyé, permet selon le second mode de réalisation de l'invention de véhiculer l'information de localisation BSIC entre le MSC et le serveur.

Il est à noter que dans le premier mode de réalisation de l'invention, présenté auparavant en relation avec les figures 2 et 3, le second message de signalisation peut également être un MIF. Dans ce cas, le MIF contient de façon classique l'identité de la station de base MSISDN et le numéro du serveur, mais ne contient pas l'information de localisation (qui est transmise de façon indépendante après avoir été extraite par le serveur annexe).

## Revendications

1. Système de radiocommunication cellulaire mis en oeuvre au sein d'un réseau de cellules géographiques parcouru par des stations mobiles, ledit système comprenant des moyens (11) de fournir à une station mobile au moins un service personnalisé fonction d'une information de localisation géographique de ladite station mobile, ledit système étant structuré hiérarchiquement en au moins un sous-système de commutation et de réseau (NSS) relié à au moins un sous-système de station de base (BSS), chaque sous-système de commutation et de réseau (NSS) comprenant notamment un commutateur du service mobile (MSC) auquel sont reliés lesdits moyens (11) de fournir au moins un service personnalisé lié à la localisation, chaque sous-système de station de base (BSS) comprenant notamment un contrôleur de station de base (BSC) auquel est reliée au moins une station de base (BS), chaque station de base (BS) étant associée à une desdites cellules géographiques, chaque sous-système de station de base (BSS) comprenant des premiers moyens de construction de message permettant, pour chaque communication d'une station mobile vers un appelé, d'élaborer un premier message de signalisation (22) contenant notamment une information de localisation de ladite station mobile dans le réseau de cellules géographiques, ledit premier message de signalisation étant destiné au commutateur du service mobile (MSC) du sous-système de commutation et de réseau (NSS) auquel est relié ledit sous-système de station de base (BSS),
ledit sytème de radiocommunication cellulaire comprenant :
- des moyens (23) de reconnaissance et de dérivation dudit premier message de signalisation (22) correspondant à une communication de ladite station mobile vers lesdits moyens (11) de fournir au moins un service personnalisé lié à la localisation;
- des moyens (26) de prélèvement de ladite information de localisation contenue dans le premier message de signalisation dérivé, et
- des moyens d'acheminement de ladite information de localisation prélevée vers lesdits moyens (11) de fournir au moins un service personnalisé lié à la localisation,
lesdits moyens (26) de prélèvement de l'information de localisation étant externes audit commutateur du service mobile (MSC), appartenant audit sous-système de commutation et de réseau (NSS), et comprenant :
- des premiers moyens (31) de réception dudit premier message de signalisation (22) ;
- des premiers moyens (32) d'extraction de ladite information de localisation contenue dans ledit premier message de signalisation reçu ;
- des seconds moyens (36) de construction de message permettant d'élaborer un message complémentaire (37) contenant notamment ladite information de localisation extraite ;
lesdits moyens d'acheminement comprenant une liaison de données reliant lesdits moyens (26) de prélèvement et lesdits moyens (11) de fournir au moins un service personnalisé lié à la localisation, et véhiculant ledit message complémentaire (37), ledit commutateur de service mobile (MSC) comprenant des troisièmes moyens (24) de construction d'un second message de signalisation (25) destiné auxdits moyens (11) de fournir au moins un service personnalisé lié à la localisation, **caractérisé en ce que** le second message de signalisation est élaboré à partir du premier message et contient notamment un second identifiant de la station mobile et le numéro des moyens de fourniture d'au moins un service personnalisé le second message de signalisation et le message complémentaire possédant au moins le second identifiant de la station mobile et le numéro des moyen de founiture du service personnalisé comme données communes et **en ce que** lesdits moyens (11) de fournir au moins un service personnalisé lié à la localisation comprennent des moyens (28) de stockage tampon permettant de synchroniser ledit second message de signalisation (25) provenant dudit commutateur du service mobile (MSC) et ledit message complémentaire (37) provenant desdits moyens (26) de prélèvement.

2. Système selon la revendication 1, **caractérisé en ce que** lesdits moyens (11) de fournir au moins un service personnalisé lié à la localisation sont un serveur.

3. Système selon la revendication 2, **caractérisé en ce que** ledit serveur (11) appartient au groupe comprenant les serveurs vocaux et les serveurs numériques.

4. Système selon l'une quelconque des revendications 1 à 3, **caractérisé en ce que** lesdits moyens (11) de fournir au moins un service personnalisé lié à la localisation appartiennent à un réseau fixe (12) relié audit commutateur du service mobile (MSC) de chaque sous-système de station de base (BSS).

5. Système selon l'une quelconque des revendications 1 à 4, **caractérisé en ce que** lesdits moyens (23) de reconnaissance et de dérivation sont internes audit commutateur du service mobile (MSC).

6. Système selon la revendication 5, **caractérisé en ce que** lesdits moyens (23) de reconnaissance et de dérivation sont réalisés sous forme de liaisons semi-permanentes.

7. Système selon l'une quelconque des revendications 1 à 6, **caractérisé en ce que** ledit premier message de signalisation (22) contient également un premier identifiant de la station mobile et le numéro des moyens de fourniture d'au moins un service personnalisé lié à la localisation,
**en ce que** lesdits moyens (26) de prélèvement externes comprennent également :
- des seconds moyens (33) d'extraction dudit premier identifiant de la station mobile contenu dans ledit premier message de signalisation reçu ;
- des premiers moyens (34) de génération, à partir d'une table de transcodage et dudit premier identifiant de la station mobile, d'un second identifiant de la station mobile ;
- des troisièmes moyens (35) d'extraction dudit numéro des moyens de fourniture d'au moins un service personnalisé lié à la localisation, contenu dans ledit premier message de signalisation reçu.

8. Système selon la revendication 7, **caractérisé en ce que** ladite table de transcodage permettant de générer ledit second identifiant de la station mobile à partir dudit premier identifiant de la station mobile est mise à jour grâce à une base de données de localisation (VLR) appartenant audit sous-système de commutation et de réseau (NSS).

9. Système selon l'une quelconque des revendications 1 à 8, **caractérisé en ce que** lesdits moyens (26) de prélèvement externes sont compris dans un serveur annexe.

10. Système de radiocommunication cellulaire mis en oeuvre au sein d'un réseau de cellules géographiques parcouru par des stations mobiles, ledit système comprenant des moyens (11) de fournir à une station mobile au moins un service personnalisé fonction d'une information de localisation géographique de ladite station mobile, ledit système étant structuré hiérarchiquement en au moins un sous-système de commutation et de réseau (NSS) relié à au moins un sous-système de station de base (BSS), chaque sous-système de commutation et de réseau (NSS) comprenant notamment un commutateur du service mobile (MSC) auquel sont reliés lesdits moyens (11) de fournir au moins un service personnalisé lié à la localisation, chaque sous-système de station de base (BSS) comprenant notamment un contrôleur de station de base (BSC) auquel est reliée au moins une station de base (BS), chaque station de base (BS) étant associée à une desdites cellules géographiques, chaque sous-système de station de base (BSS) comprenant des premiers moyens de construction de message permettant, pour chaque communication d'une station mobile vers un appelé, d'élaborer un premier message de signalisation (42) contenant notamment une information de localisation de ladite station mobile dans le réseau de cellules géographiques, ledit premier message de signalisation étant destiné au commutateur du service mobile (MSC) du sous-système de commutation et de réseau (NSS) auquel est relié ledit sous-système de station de base (BSS),
ledit système de radiocommunication cellulaire comprenant :
- des moyens (51) de reconnaissance et de dérivation dudit premier message de signalisation (42) correspondant à une communication de ladite station mobile vers lesdits moyens (11) de fournir au moins un service personnalisé lié à la localisation;
- des moyens (56) de prélèvement de ladite information de localisation contenue dans le premier message de signalisation dérivé, et
- des moyens d'acheminement de ladite information de localisation prélevée vers lesdits moyens (11) de fournir au moins un service personnalisé lié à la localisation.
ledit commutateur du service mobile (MSC) comprenant des troisièmes moyens (54) de construction d'un second message de signalisation (43) destiné auxdits moyens (11) de fournir au moins un service personnalisé lié à la localisation,
lesdits moyens (56) de prélèvement de l'information de localisation étant internes audit commutateur du service mobile (MSC) et comprenant :
- des seconds moyens (52) de réception dudit premier message de signalisation (42) ;
- des quatrièmes moyens (53) d'extraction de ladite information de localisation dudit premier message de signalisation reçu ;
**caractérisé en ce que** lesdits troisièmes moyens de construction sont adaptés à recevoir d'une part ledit premier message de signalisation et d'autre part l'information de localisation provenant des quatrièmes moyens d'extraction
ledit second message de signalisation (43), élaboré par lesdits troisièmes moyens (54) de construction de message à partir du premier message, contenant également ladite information de localisation extraite, ainsi que notamment un second identifiant de la station mobile et le numéro des moyens de fournir le service personnalisé
et **en ce que** ledit second message de signalisation (43) est un message initial d'adresse (MIF) comprenant dans son champ "Identité du premier appelé" ladite information de localisation (63).

11. Système selon la revendication 10, **caractérisé en ce que** ledit message initial d'adresse (MIF) comprend en outre :
- dans son champ "Deuxième octet d'indicateurs" d'une part une première information complémentaire (64) indiquant la présence d'une information dans ledit champ "Identité du premier appelé" et d'autre part une seconde information complémentaire (65) indiquant que ladite information présente dans le champ "Identité du premier appelé" est ladite information de localisation; et
- dans son champ "Indicateur de message", une troisième information complémentaire (66) indiquant que ledit champ "Identité du premier appelé" est utilisé.

12. Système selon la revendication 10 ou 11, **caractérisé en ce que** ledit premier message de signalisation (42) comprend également un premier identifiant de la station mobile et le numéro des moyens (11) de fourniture d'au moins un service personnalisé lié à la localisation,
et **en ce que** ledit second message de signalisation (43), qui comprend également ladite information de localisation, comprend notamment un second identifiant de la station mobile et ledit numéro des moyens (11) de fourniture d'au moins un service personnalisé lié à la localisation.

13. Système selon l'une quelconque des revendications 10 à 12, **caractérisé en ce que** lesdits moyens (56) de prélèvement internes audit commutateur du service mobile (MSC) appartiennent au groupe comprenant : les processeurs de traitement d'appels (55) et les processeurs associés (56) à un processeur de traitement d'appels.

14. Système selon l'une quelconque des revendications 1 à 13, **caractérisé en ce qu'**il est du type GSM.

15. Système selon la revendication 14 et l'une quelconque des revendications 7 et 12, **caractérisé en ce que** ledit premier identifiant de la station mobile est un TMSI, et **en ce que** ledit second identifiant de la station mobile est un MSISDN.

## Patentansprüche

1. Zellulares Funkkommunikationssystem das innerhalb eines von mobilen Stationen durchfahrenen Netzes geographischer Zellen verwendet wird, wobei dieses System über Mittel (11) verfügt, um einer mobilen Station mindestens einen kundenspezifischen Dienst bereitzustellen, als Funktion einer geographischen Ortsangabe dieser mobilen Station, wobei das System eine hierarchische Struktur aufweist, die mindestens ein Schalt- und Netzwerksubsystem (NSS) umfasst, das mit mindestens einem Basisstationssubsystem (BSS) verbunden ist, wobei jedes Schalt- und Netzwerksubsystem (NSS) insbesondere eine Schalteinheit des mobilen Dienstes (MSC) umfasst, mit dem die Mittel (11) zum Bereitstellen von mindestens einem mit dem Ort zusammenhängenden kundenspezifischen Dienst verbunden sind, wobei jedes Basisstationssubsystem (BSS) insbesondere einen Kontroller der Basisstation (BSC) umfasst, mit dem mindestens eine Basisstation (BS) verbunden ist, wobei jede Basisstation (BS) einer der geographischen Zellen zugeordnet ist, wobei jedes Basisstationssubsystem (BSS) erste Mittel zum Bilden einer Nachricht aufweist, die für jede Verbindung einer mobilen Station mit einem angerufenen Teilnehmer die Bearbeitung einer ersten Signalisierungsnachricht (22) ermöglichen, die insbesondere eine Ortsangabe der mobilen Station im geographischen zellularen Netzwerk umfasst, wobei diese erste Signalisierungsnachricht an die Schalteinheit der mobilen Dienstleistung (MSC) des Schalt- und Netzwerksubsystems (NSS) gesendet wird, mit dem das Basisstationssubsystem (BSS) verbunden ist,
wobei das zellulare Funkkommunikationssystem folgendes umfasst:
- Mittel (23) zum Erkennen und Ableiten der ersten Signalisierungsnachricht (22), entsprechend einer Nachricht der mobilen Station zu den Mitteln (11) zum Bereitstellen von mindestens einem mit dem Ort zusammenhängenden kundenspezifischen Dienst;
- Mittel (26) zum Entnehmen der in der ersten abgeleiteten Signalisierungsnachricht enthaltenen Ortsangabe und
- Mittel zum Leiten der abgegriffenen Ortsangabe zu den Mitteln (11) zum Bereitstellen von mindestens einem mit dem Ort zusammenhängenden kundenspezifischen Dienst,
wobei diese Mittel (26) zum Entnehmen der Ortsangabe sich außerhalb der Schalteinheit des mobilen Dienstes (MSC) befinden, zu dem Schalt- und Netzwerksubsystem (NSS) gehören und folgendes umfassen:
- erste Mittel (31) für den Empfang der ersten Signalisierungsnachricht (22);
- erste Mittel (32) zum Extrahieren der in der ersten empfangenen Signalisierungsnachricht enthaltenen Ortsangabe;
- zweite Mittel (36) zum Bilden von Nachrichten, die das Erzeugen einer insbesondere die extrahierte Ortsangabe enthaltende Zusatznachricht (37) ermöglichen;
wobei die besagten Mittel zum Leiten eine Datenverbindung umfassen, welche die Mittel (26) zum Entnehmen und die Mittel (11) zum Bereitstellen von mindestens eines mit dem Ort zusammenhängenden kundenspezifischen Dienstes verbinden und die Zusatznachricht (37) leiten,
wobei die Schalteinheit für den mobilen Dienst (MSC) dritte Mittel (24) umfasst, mit welchen eine zweite Signalisierungsnachricht (25) aufgebaut werden kann, die an die Mittel (11) zum Bereitstellen von mindestens einem mit dem Ort zusammenhängenden kundenspezifischen Dienstes gesendet werden,
**dadurch gekennzeichnet, dass** die zweite Signalisierungsnachricht aus der ersten Nachricht aufgebaut wird und insbesondere ein zweites Identifikationselement der mobilen Station und die Zahl der Mittel zum Bereitstellen von mindestens einem kundenspezifischen Dienst umfasst, wobei die zweite Signalisierungsnachricht und die Zusatznachricht mindestens das zweite Identifikationselement der mobilen Station und die Zahl der Mittel zum Bereitstellen von mindestens einem kundenspezifischen Dienst als gemeinsame Daten umfasst und dadurch,
dass die Mittel (11) zum Bereitstellen von mindestens einem mit dem Ort zusammenhängenden kundenspezifischen Dienst über Pufferspeichermittel (28) verfügen, mit denen die zweite aus der Schalteinheit des mobilen Dienstes (MSC) kommende Signalisierungsnachricht (25) sowie die aus den Mitteln (26) zum Entnehmen kommende Zusatznachricht (37) synchronisiert werden können.

2. System nach Anspruch 1, **dadurch gekennzeichnet, dass** es sich bei den Mitteln (11) zum Bereitstellen von mindestens einem mit dem Ort zusammenhängenden kundenspezifischen Dienst um einen Server handelt.

3. System nach Anspruch 2, **dadurch gekennzeichnet, dass** der Server (11) zu der Gruppe der Sprachserver und der numerischen Server gehört.

4. System nach einem der Ansprüche 1 bis 3, **dadurch gekennzeichnet, dass** die Mittel (11) zum Bereitstellen von mindestens einem mit dem Ort zusammenhängenden kundenspezifischen Dienst einem festen Netzwerk (12) angehören, das mit der Schalteinheit des mobilen Dienstes (MSC) eines jeden Basisstationssubsystems (BSS) verbunden sind.

5. System nach einem der Ansprüche 1 bis 4, **dadurch gekennzeichnet, dass** die Mittel (23) zum Erkennen und Ableiten innerhalb der Schalteinheit des mobilen Dienstes (MSC) liegen.

6. System nach Anspruch 5, **dadurch gekennzeichnet, dass** die Mittel (23) zum Erkennen und Ableiten in der Form von teilbeständigen Verbindungen ausgeführt sind.

7. System nach einem der Ansprüche 1 bis 6, **dadurch gekennzeichnet, dass** die erste Signalisierungsnachricht (22) ebenfalls ein erstes Identifikationselement der mobilen Station sowie die Zahl der Mittel zum Bereitstellen von mindestens einem mit dem Ort zusammenhängenden kundenspezifischen Dienst umfassen,
dadurch, dass die externen Mittel (26) zum Entnehmen ebenfalls folgendes umfassen:
- zweite Mittel (33) zum Extrahieren des ersten Identifikationselementes der mobilen Station, weiches in der ersten empfangenen Signalisierungsnachricht enthalten ist;
- erste Mittel (34) zum Erzeugen eines zweiten Identifikationselementes der mobilen Station, ausgehend von einer Transkodierungstabelle und des ersten Identifikationselementes der mobilen Station;
- dritte Mittel (35) zum Extrahieren der in der ersten empfangenen Signalisierungsnachricht enthaltenen Zahl der Mittel zum Bereitstellen von mindestens einem mit dem Ort zusammenhängenden kundenspezifischen Dienst.

8. System nach Anspruch 7, **dadurch gekennzeichnet, dass** die Transkodierungstabelle, die das Erzeugen des zweiten Identifikationselementes der mobilen Station, ausgehend vom ersten Identifikationselement der mobilen Station, ermöglicht, mit Hilfe einer Ortdatenbasis (VLR) aktualisiert wird, welche dem Schalt- und Netzwerksubsystem (NSS) angehört.

9. System nach einem der Ansprüche 1 bis 8, **dadurch gekennzeichnet, dass** die äußeren Entnahmemittel (26) sich in einem Nebenserver befinden.

10. Zellulares Funkkommunikationssystem, das innerhalb eines von mobilen Stationen durchfahrenen Netzes geographischer Zellen verwendet wird, wobei dieses System über Mittel (11) verfügt, um einer mobilen Station mindestens einen kundenspezifischen Dienst bereitzustellen, als Funktion einer geographischen Ortsangabe dieser mobilen Station, wobei das System eine hierarchische Struktur aufweist, die mindestens ein Schaft- und Netzwerksubsystem (NSS) umfasst, das mit mindestens einem Basisstationssubsystem (BSS) verbunden ist, wobei jedes Schalt- und Netzwerksubsystem (NSS) insbesondere eine Schalteinheit des mobilen Dienstes (MSC) umfasst, mit dem die Mittel (11) zum Bereitstellen von mindestens einem mit dem Ort zusammenhängenden kundenspezifischen Dienst verbunden sind, wobei jedes Basisstationssubsystem (BSS) insbesondere einen Kontroller der Basisstation (BSC) umfasst, mit dem mindestens eine Basisstation (BS) verbunden ist, wobei jede Basisstation (BS) einer der geographischen Zellen zugeordnet ist, wobei jedes Basisstationssubsystem (BSS) erste Mittel zum Bilden einer Nachricht aufweist, die für jede Verbindung einer mobilen Station zu einem angerufenen Teilnehmer die Bearbeitung einer ersten Signalisierungsnachricht (42) ermöglichen, die insbesondere eine Ortsangabe der mobilen Station im geographischen zellularen Netzwerk umfasst, wobei diese erste Signalisierungsnachricht an die Schalteinheit der mobilen Dienstleistung (MSC) des Schalt- und Netzwerksubsystems (NSS) gesendet wird, mit dem das Basisstationssubsystem (BSS) verbunden ist,
wobei das zellulare Funkkommunikationssystem folgendes umfasst:
- Mittel (51) zum Erkennen und Ableiten der ersten Signalisierungsnachricht (42), entsprechend einer Nachricht der mobilen Station zu den Mitteln (11) zum Bereitstellen von mindestens einem mit dem Ort zusammenhängenden kundenspezifischen Dienst;
- Mittel (56) zum Entnehmen der in der ersten abgeleiteten Signalisierungsnachricht enthaltenen Ortsangabe und
- Mittel zum Leiten der abgegriffenen Ortsangabe zu den Mitteln (11 ) zum Bereitstellen von mindestens einem mit dem Ort zusammenhängenden kundenspezifischen Dienst,
wobei die Schalteinheit des mobilen Dienstes (MSC) dritte Mittel (54) zum Bilden einer zweiten Signalisierungsnachricht (43) umfasst, die an die Mittel (11) zum Bereitstellen von mindestens einem mit dem Ort zusammenhängenden kundenspezifischen Dienst gesendet werden,
wobei die Mittel (56) zum Entnehmen der Ortsangabe sich innerhalb der der Schalteinheit des mobilen Dienstes (MSC) befinden und folgendes umfassen:
- zweite Mittel (52) zum Empfangen der ersten Signalisierungsnachricht (42);
- vierte Mittel (53) zum Extrahieren der Ortsangabe aus der ersten empfangenen Signalisierungsnachricht,
**dadurch gekennzeichnet, dass** die dritten Mittel zum Bilden dazu geeignet sind, einerseits die erste Signalisierungsnachricht und andererseits die Ortsangabe, die aus den vierten Mitteln zum Extrahieren kommt, zu empfangen,
wobei die zweite Signalisierungsnachricht (43), die von den dritten Mitteln (54) zum Bilden einer Nachricht aus der ersten Nachricht bearbeitet werden, ebenfalls die extrahierte Ortsangabe enthalten sowie insbesondere das zweite Identifikationselement der mobilen Station und die Zahl der Mittel zum Bereitstellen eines kundenspezifischen Dienstes und,
dadurch, dass die zweite Signalisierungsnachricht (43) eine anfängliche Adressnachricht (MIF) ist, die im Felde "Identität des ersten angerufenen Teilnehmers" die Ortsangabe (63) umfasst.

11. System nach Anspruch 10, **dadurch gekennzeichnet, dass** die anfängliche Adressenmeldung (MIF) darüber hinaus folgendes umfasst:
- im Felde "zweites Indikatorenbyte" einerseits eine erste Zusatzinformation (64), die das Vorhandensein einer Information im Felde "Identität des ersten angerufenen Teilnehmers" anzeigt, sowie andererseits eine zweite Zusatzinformation (65), die angibt, das es sich bei der im Felde "Identität des ersten angerufenen Teilnehmers" enthaltenen Information um die Ortsangabe handelt und,
- im Felde "Nachrichtenanzeige" eine dritte Zusatzinformation (66), die angibt, dass das Feld "Identität des ersten angerufenen Teilnehmers" benutzt wird.

12. System nach Anspruch 10 oder 11, **dadurch gekennzeichnet, dass** die erste Signalisierungsnachricht (42) ebenfalls ein erstes Identifikationselement der mobilen Station und die Zahl der Mittel (11) zum Bereitstellen von mindestens einem mit dem Ort zusammenhängenden kundenspezifischen Dienst umfasst und dadurch,
dass die zweite Signalisierungsnachricht (43), welche ebenfalls die Ortsangabe umfasst, insbesondere ein zweites Identifikationselement der mobilen Station umfasst sowie die Zahl der Mittel (11) zum Bereitstellen von mindestens einem mit dem Ort zusammenhängenden kundenspezifischen Dienst.

13. System nach einem der Ansprüche 10 bis 12, **dadurch gekennzeichnet, dass** die Mittel (56) zum Entnehmen, die sich innerhalb der Schalteinheit der mobilen Dienstleistung (MSC) befinden, der Gruppe angehören, die folgendes umfasst: Anrufverarbeitungsprozessoren (55) und die mit einem Anrufverarbeitungsprozessor assoziierten Prozessoren (56).

14. System nach einem der Ansprüche 1 bis 13, **dadurch gekennzeichnet, dass** es vom Typ GSM ist.

15. System nach Anspruch 14 und einem der Ansprüche 7 oder 12, **dadurch gekennzeichnet, dass** das erste Identifikationselement der mobilen Station ein TMSI ist, und dadurch, dass das zweite Identifikationselement der mobilen Station ein MSISDN ist.

## Claims

1. Cellular radiocommunication system utilised within a network of geographical cells traversed by mobile stations, said system comprising means (11) for providing a mobile station with at least one personalised service as a function of a geographical location information signal of said mobile station, said system being hierarchically structured into at least one network and switching centre sub-system (NSS) connected to at least one base station sub-system (BSS), each network and switching centre sub-system (NSS) comprising in particular a mobile services switching centre (MSC) to which are connected said
means (11) for providing at least one location-dependent personalised service, each base station sub-system (BSS) comprising in particular a base station controller (BSC) to which is connected at least one base station (BS), each base station (BS) being associated with one of said geographical cells, each base station sub-system (BSS) comprising first message construction means enabling, for each call from a mobile station to a called station, a first signalling message (22) containing in particular a location information signal of said mobile station in the network of geographical cells, to be composed, said first signalling message being destined for the mobile services switching centre (MSC) of the network and switching centre sub-system (NSS) to which said base station sub-system (BSS) is connected,
said cellular radiocommunication system comprising:
- means (23) for recognition and derivation of said first signalling message (22) corresponding to a call from said mobile station to said means (11) for providing at least one location-dependent personalised service;
- means (26) for extracting said location information signal contained in the first derived signalling message, and
- means for routing said extracted location information signal to said means (11) for providing at least one location-dependent personalised service,
said means (26) for extracting the location information signal being external to said mobile services switching centre (MSC), belonging to the said network and switching centre sub-system (NSS), and comprising:
- first means (31) for receiving said first signalling message (22);
- first means (32) for extracting said location information signal contained in said first received signalling message;
- second message construction means (36) enabling a supplementary message (37) containing in particular said extracted location information signal to be composed;
said routing means comprising a data link connecting said means (26) for extracting and said means (11) for providing at least one location-dependent personalised service, and carrying said supplementary message (37), said mobile services switching centre (MSC) comprising third means (24) for constructing a second signalling message (25) destined for said means (11) for providing at lease one location-dependent personalised service, **characterised in that** the second signalling message is composed from the first message and contains in particular a second identifier of the mobile station and the number of the means for providing at least one personalised service, the second signalling message and the supplementary message possessing at least the second identifier of the mobile station and the number of the means for providing the personalised service as common data,
and **in that** said means (11) for providing at least one location-dependent personalised service comprise buffer storage means (28) enabling said second signalling message (25) coming from said mobile services switching centre (MSC) and said supplementary message (37) coming from said extraction means (26), to be synchronised.

2. System according to Claim 1, **characterised in that** said means (11) for providing at least one location-dependent personalised service are a server.

3. System according to Claim 2, **characterised in that** said server (11) belongs to a group comprising voice servers and data servers.

4. System according to any one of Claims 1 to 3, **characterised in that** said means (11) for providing at least one location-dependent personalised service belong to a fixed network (12) connected to said mobile services switching centre (MSC) of each base station sub-system (BSS).

5. System according to any one of Claims 1 to 4, **characterised in that** said recognition and derivation means (23) are internal to said mobile services switching centre (MSC).

6. System according to Claim 5, **characterised in that** said recognition and derivation means (23) are realised in the form of semi-permanent links.

7. System according to any one of Claim 1 to 6, **characterised in that** said first signalling message (22) also contains a first identifier of the mobile station and the number of the means for providing at least one location-dependent personalised service,
**in that** said external extraction means (26) also comprise:
- second means (33) for extracting said first identifier of the mobile station contained in said received first signalling message;
- first means (34) for generating, from a code conversion table and from said first identifier of the mobile station, a second identifier of the mobile station;
- third means (35) for extracting said number of the means for providing at least one location-dependent personalised service, contained in said first received signalling message.

8. System according to Claim 7, **characterised in that** said code conversion table enabling said second identifier of the mobile station to be generated from said first identifier of the mobile station is updated from a visiting location register (VLR) belonging to said network and switching centre sub-system (NSS).

9. System according to any one of Claims 1 to 8, **characterised in that** said external extraction means (26) are contained in an ancillary server.

10. Cellular radiocommunication system utilised within a network of geographical cells traversed by mobile stations, said system comprising means (11) for providing a mobile station with at least one personalised service as a function of a geographical location information signal of said mobile station, said system being hierarchically structured into at least one network and switching centre sub-system (NSS) connected to at least one base station sub-system (BSS), each network and switching centre sub-system (NSS) comprising in particular a mobile services switching centre (MSC) to which are connected said
means (11) for providing at least one location-dependent personalised service, each base station sub-system (BSS) comprising in particular a base station controller (BSC) to which is connected at least one base station (BS), each base station (BS) being associated with one of said geographical cells, each base station sub-system (BSS) comprising first message construction means enabling, for each call from a mobile station to a called station, a first signalling message (22) containing in particular a location information signal of said mobile station in the network of geographical cells, to be composed, said first signalling message being destined for the mobile services switching centre (MSC) of the network and switching centre sub-system (NSS) to which said base station sub-system (BSS) is connected,
said cellular radiocommunication system comprising:
- means (51) for recognition and derivation of said first signalling message (42) corresponding to a call from said mobile station to said means (11) for providing at least one location-dependent personalised service;
- means (56) for extracting said location information signal contained in the first derived signalling message, and
- means for routing said extracted location information signal to said means (11) for providing at least one location-dependent personalised service, said mobile services switching centre (MSC) comprising third means (54) for constructing a second signalling message (43) destined from said means (11) for providing a location-dependent personalised service,
said means (56) for extracting the location information signal being internal to said mobile services switching centre (MSC), and comprising:
- second means (52) for receiving said first signalling message (42);
- fourth means (53) for extracting said location information signal of said first received signalling message; **characterised in that** said third construction means are designed to receive on the one hand said first signalling message and on the other hand the location information signal coming from the fourth extraction means, said second signalling message (43), composed by said third means (54) for constructing the message from the first message also containing said extracted location information signal, as well as in particular the second identifier of the mobile station and the number of the means for providing the personalised service,
and **in that** said second signalling message (43) is an initial address message (MIF) containing said location information signal (63) in its "identity of the first called station" field.

11. System according to Claim 10, **characterised in that** said initial address message (MIF) furthermore contains:
- in its "second indicators byte" on the one hand a first supplementary information signal (64) indicating the presence of an information signal in said "identity of the first called station" field and on the other hand a second supplementary information signal (65) indicating that said information signal present in the "identity of the first called station" field is said location information signal; and
- in its "message indicator" field a third supplementary information signal (66) indicating that said "identity of the first called station" field is used.

12. System according to Claim 10 or 11, **characterised in that** said first signalling message (42) also contains a first identifier of the mobile station and the number of the means (11) for providing at least one location-dependent personalised service,
and **in that** said signalling message (43), which also contains said location information signal, contains in particular a second identifier of the mobile station and said number of the means (11) for providing at least one location-dependent personalised service.

13. System according any one of Claims 10 to 12, **characterised in that** said extraction means (56) internal to the mobile services switching centre (MSC) belong to the group comprising: call handling processors (55) and the processors (56) associated with the a call handling processor.

14. System according any one of Claims 1 to 13, **characterised in that** it is of the GSM type.

15. System according to Claim 14 and to any one of Claims 7 and 12, **characterised in that** said first identifier of the mobile station is a TMSI, and **in that** said second identifier of the mobile station is an MSISDN.
